# EUROPEAN PATENT APPLICATION

(11) **EP 4 472 269 A1**
(43) Date of publication of application: **04.12.2024**
(21) Application number: 23835736.2
(22) Date of filing: 27.06.2023
(51) Int. Cl.: H04W 24/02, H04W 24/08, H04W 24/10, H04L 43/06

(54) **METHOD AND DEVICE FOR SUPPORTING QOE IN MOBILE COMMUNICATION SYSTEM**

(30) Priority: 06.07.2022 KR 20220083334
(71) Applicant: Samsung Electronics Co., Ltd, Suwon-si, Gyeonggi-do 16677 (KR)
(72) Inventor: KIM, Sangbum, Suwon-si, Gyeonggi-do 16677 (KR); JEONG, Seungbeom, Suwon-si, Gyeonggi-do 16677 (KR)
(74) Representative: Gulde & Partner
(86) International application number: PCT/KR2023/008959
(87) International publication number: WO 2024/010269

(57) **Abstract**

The present invention relates to a method comprising the steps of: receiving a first radio resource control (RRC) message including at least one piece of quality of experience (QoE) configuration information, and information indicating that the at least one piece of QoE configuration information is related to one piece of signaling-based QoE configuration information; receiving a second RRC message for releasing an RRC connection; measuring QoE on the basis of the at least one piece of QoE configuration information; and transmitting, once a terminal in an RRC idle state or in an RRC inactive state is connected to a base station, a third RRC message including signaling-based information relating to QoE to the base station.

## Description

### [Technical Field]

The disclosure relates to operations of a terminal and base station in a mobile communication system. In addition, the disclosure relates to a method for protecting signaling-based quality-of-experience (QoE) in a mobile communication system.

### [Background Art]

5G mobile communication technology defines a wide frequency band to enable fast transmission speed and new services, and can be implemented not only in a sub-6 GHz frequency band ("sub 6 GHz") such as 3.5 GHz but also in an ultra-high frequency band ("above 6 GHz") called mmWave such as 28 GHz or 39 GHz. In addition, 6G mobile communication technology called "beyond 5G system" is being considered for implementation in a terahertz (THz) band (e.g., band of 95 GHz to 3 THz) to achieve transmission speed that is 50 times faster and ultra-low latency that is reduced to 1/10 compared with 5G mobile communication technology.

In the early days of 5G mobile communication technology, to meet service support and performance requirements for enhanced mobile broadband (eMBB), ultra-reliable and low-latency communication (URLLC), and massive machine-type communications (mMTC), standardization has been carried out regarding beamforming for mitigating the pathloss of radio waves and increasing the propagation distance thereof in the mmWave band, massive MIMO, support of various numerology for efficient use of ultra-high frequency resources (e.g., operating multiple subcarrier spacings), dynamic operations on slot formats, initial access schemes to support multi-beam transmission and broadband, definition and operation of bandwidth parts (BWP), new channel coding schemes such as low density parity check (LDPC) codes for large-capacity data transmission and polar codes for reliable transmission of control information, L2 pre-processing, and network slicing for providing a dedicated network specialized for a specific service.

Currently, discussions are underway to improve 5G mobile communication technology and enhance performance thereof in consideration of the services that the 5G mobile communication technology has initially intended to support, and physical layer standardization is in progress for technologies such as V2X (Vehicle-to-Everything) that aims to help a self-driving vehicle to make driving decisions based on its own location and status information transmitted by vehicles and to increase user convenience, new radio unlicensed (NR-U) for the purpose of system operation that meets various regulatory requirements in unlicensed bands, low power consumption scheme for NR terminals (UE power saving), non-terrestrial network (NTN) as direct terminal-satellite communication to secure coverage in an area where communication with a terrestrial network is not possible, and positioning.

In addition, standardization in radio interface architecture/protocol is in progress for technologies such as intelligent factories (industrial Internet of things, IIoT) for new service support through linkage and convergence with other industries, integrated access and backhaul (IAB) that provides nodes for network service area extension by integrating and supporting wireless backhaul links and access links, mobility enhancement including conditional handover and dual active protocol stack (DAPS) handover, 2-step random access (2-step RACH for NR) that simplifies the random access procedure; and standardization in system architecture/service is also in progress for the 5G baseline architecture (e.g., service based architecture, service based interface) for integrating network functions virtualization (NFV) and software defined networking (SDN) technologies, and mobile edge computing (MEC) where the terminal receives a service based on its location.

When such a 5G mobile communication system is commercialized, connected devices whose number is explosively increasing will be connected to the communication networks; accordingly, it is expected that enhancement in function and performance of the 5G mobile communication system and the integrated operation of the connected devices will be required. To this end, new research will be conducted regarding 5G performance improvement and complexity reduction, AI service support, metaverse service support, and drone communication by utilizing extended reality (XR) for efficiently supporting augmented reality (AR), virtual reality (VR), and mixed reality (MR), artificial intelligence (AI), and machine learning (ML).

Further, such advancement of 5G mobile communication systems will be the basis for the development of technologies such as new waveforms for ensuring coverage in the terahertz band of 6G mobile communication technology, full dimensional MIMO (FD-MIMO), multi-antenna transmission such as array antenna or large scale antenna, metamaterial-based lenses and antennas for improved coverage of terahertz band signals, high-dimensional spatial multiplexing using orbital angular momentum (OAM), reconfigurable intelligent surface (RIS) technique, full duplex technique to improve frequency efficiency and system network of 6G mobile communication technology, satellites, AI-based communication that utilizes artificial intelligence (AI) from the design stage and internalizes end-to-end AI support functions to realize system optimization, and next-generation distributed computing that realizes services whose complexity exceeds the limit of terminal computing capabilities by utilizing ultra-high-performance communication and computing resources.

### [Disclosure]

### [Technical Problem]

The disclosure aims to provide an efficient operation method for a terminal and a base station in a mobile communication system. In addition, the disclosure aims to provide a method and apparatus for protecting signaling-based QoE in a mobile communication system.

### [Technical Solution]

In an embodiment of the disclosure to achieve the above objectives, the method of a terminal in a wireless communication system may include: receiving a first radio resource control (RRC) message including at least quality-of-experience (QoE) configuration information and information indicating that the QoE configuration information is related to one piece of signaling-based QoE configuration information; receiving a second RRC message for RRC connection release; performing a QoE measurement operation based on at least one piece of QoE configuration information; and transmitting, in case that the terminal in RRC idle state or RRC inactive state is connected to a base station, a third RRC message including signaling-based QoE related information to the base station.

Additionally, in an embodiment of the disclosure, the method of a base station in a wireless communication system may include: receiving, in case that connected to a terminal in radio resource control (RRC) idle state or RRC inactive state, an RRC message including signaling-based quality-of- experience (QoE) related information from the terminal; receiving a request for configuring management-based QoE from a server; and determining whether to configure management-based QoE to the terminal based on the signaling-based QoE related information.

Additionally, in an embodiment of the disclosure, the terminal in a wireless communication system may include: a transceiver; and a controller, wherein the controller may be configured to control: receiving a first radio resource control (RRC) message including at least quality-of-experience (QoE) configuration information and information indicating that the QoE configuration information is related to one piece of signaling-based QoE configuration information; receiving a second RRC message for RRC connection release; performing a QoE measurement operation based on at least one piece of QoE configuration information; and transmitting, in case that the terminal in RRC idle state or RRC inactive state is connected to a base station, a third RRC message including signaling-based QoE related information to the base station.

Further, in an embodiment of the disclosure, the base station in a wireless communication system may include: a transceiver; and a controller, wherein the controller may be configured to control: receiving, in case that connected to a terminal in radio resource control (RRC) idle state or RRC inactive state, an RRC message including signaling-based quality-of- experience (QoE) related information from the terminal; receiving a request for configuring management-based QoE from a server; and determining whether to configure management-based QoE to the terminal based on the signaling-based QoE related information.

The technical objectives to be achieved in the embodiments of the disclosure are not limited to those described above, and other technical objectives not mentioned will be clearly understood by those skilled in the art to which the disclosure pertains from the following description.

### [Advantageous Effects]

According to an embodiment of the disclosure, it is possible to provide an efficient operation method for a terminal and a base station in a mobile communication system.

In addition, according to an embodiment of the disclosure, it is possible to provide a method and apparatus for protecting signaling-based QoE in a mobile communication system.

### [Description of Drawings]

FIG. 1 is a diagram illustrating the architecture of a next-generation mobile communication system according to an embodiment of the disclosure.
FIG. 2 is a diagram illustrating quality of experience (QoE) measurement operation according to an embodiment of the disclosure.
FIG. 3 is a diagram for explaining signaling-based QoE and management-based QoE according to an embodiment of the disclosure.
FIG. 4 is a diagram for explaining a problem in which signaling-based QoE is invalidated according to an embodiment of the disclosure.
FIG. 5 is a diagram for explaining a method for protecting signaling-based QoE according to an embodiment of the disclosure.
FIG. 6 is a diagram for describing UE operation for protecting signaling-based QoE according to an embodiment of the disclosure.
FIG. 7 is a diagram for describing base station operation for protecting signaling-based QoE according to an embodiment of the disclosure.
FIG. 8 is a diagram for explaining a method for protecting signaling-based QoE in RRC_INACTIVE mode according to an embodiment of the disclosure.
FIG. 9 is a diagram for describing operations of the old base station for protecting signaling-based QoE in RRC_INACTIVE mode according to an embodiment of the disclosure.
FIG. 10 is a diagram for describing operations of a neighbor base station for protecting signaling-based QoE in RRC INACTIVE mode according to an embodiment of the disclosure.
FIG. 11 is a drawing showing the structure of a UE according to an embodiment of the disclosure.
FIG. 12 is a drawing showing the structure of a base station according to an embodiment of the disclosure.

### [Mode for Disclosure]

Hereinafter, preferred embodiments of the disclosure will be described in detail with reference to the accompanying drawings. Here, it should be noted that in the attached drawings, the same components are indicated by the same symbols as much as possible. In addition, detailed descriptions of known functions and configurations that may obscure the gist of the disclosure will be omitted.

In describing embodiments in this specification, descriptions of technical details well known in the art and not directly related to the disclosure may be omitted. This is to more clearly convey the gist of the disclosure without obscurities by omitting unnecessary descriptions.

Likewise, in the drawings, some elements are exaggerated, omitted, or only outlined in brief. Also, the size of each element does not necessarily reflect the actual size. The same reference symbols are used throughout the drawings to refer to the same or corresponding parts.

Advantages and features of the disclosure and methods for achieving them will be apparent from the following detailed description of embodiments taken in conjunction with the accompanying drawings. However, the disclosure is not limited to the embodiments disclosed below but may be implemented in various different ways, the embodiments are provided only to complete the disclosure and to fully inform the scope of the disclosure to those skilled in the art to which the disclosure pertains, and the disclosure is defined only by the scope of the claims. The same reference symbols are used throughout the specification to refer to the same parts.

Meanwhile, it is known to those skilled in the art that blocks of a flowchart (or sequence diagram) and a combination of flowcharts may be represented and executed by computer program instructions. These computer program instructions may be loaded on a processor of a general purpose computer, special purpose computer or programmable data processing equipment. In case that the loaded program instructions are executed by the processor, they create a means for carrying out functions described in the flowchart. As the computer program instructions may be stored in a computer readable memory that is usable in a specialized computer or a programmable data processing equipment, it is also possible to create articles of manufacture that carry out functions described in the flowchart. As the computer program instructions may be loaded on a computer or a programmable data processing equipment, in case that executed as processes, they may carry out steps of functions described in the flowchart.

A block of a flowchart may correspond to a module, a segment or a code containing one or more executable instructions implementing one or more logical functions, or to a part thereof. In some cases, functions described by blocks may be executed in an order different from the listed order. For example, two blocks listed in sequence may be executed at the same time or executed in reverse order.

In the description, the word "unit", "module" or the like may refer to a software component or hardware component such as an FPGA or ASIC capable of carrying out a function or an operation. However, "unit" or the like is not limited to hardware or software. A unit or the like may be configured so as to reside in an addressable storage medium or to drive one or more processors. Units or the like may refer to software components, object-oriented software components, class components, task components, processes, functions, attributes, procedures, subroutines, program code segments, drivers, firmware, microcode, circuits, data, databases, data structures, tables, arrays or variables. A function provided by a component and unit may be a combination of smaller components and units, and may be combined with others to compose large components and units. Components and units may be configured to drive a device or one or more processors in a secure multimedia card.

In the following description, the term "base station" refers to a main agent allocating resources to terminals and may be at least one of Node B, BS, eNB (eNode B), gNB (gNode B), radio access unit, base station controller, or network node. The term "terminal" may refer to at least one of user equipment (UE), mobile station (MS), cellular phone, smartphone, computer, or multimedia system with a communication function. Additionally, the embodiments of the disclosure may be applied to other communication systems having similar technical backgrounds or channel types as the embodiments of the disclosure described below. In addition, the embodiments of the disclosure may be applied to other communication systems through some modifications without significantly departing from the scope of the disclosure. For example, this may include the 5^{th} generation mobile communication technology (SG, new radio, NR) developed after LTE-A, and the term 5G hereinafter may be a concept that includes existing LTE, LTE-A, and other similar services. Further, it should be understood by those skilled in the art that the disclosure is applicable to other communication systems without significant modifications departing from the scope of the disclosure.

Those terms used in the following description for identifying an access node, indicating a network entity or network function (NF), indicating a message, indicating an interface between network entities, and indicating various identification information are taken as illustration for ease of description. Hence, the disclosure is not limited by the terms to be described later, and other terms referring to objects having an equivalent technical meaning may be used.

For convenience of explanation, some terms and names defined in the 3GPP (3rd generation partnership project) LTE (long term evolution) standards and/or 3GPP NR (new radio) standards may be used in the following description. However, the disclosure is not limited by the above terms and names, and may be equally applied to systems complying with other standards. The description written based on LTE systems in the disclosure may also be applied to other mobile communication systems such as next-generation mobile communication system NR. For example, in the disclosure, the eNB in LTE may correspond to the gNB in NR, and the MME in LTE may correspond to the AMF in NR.

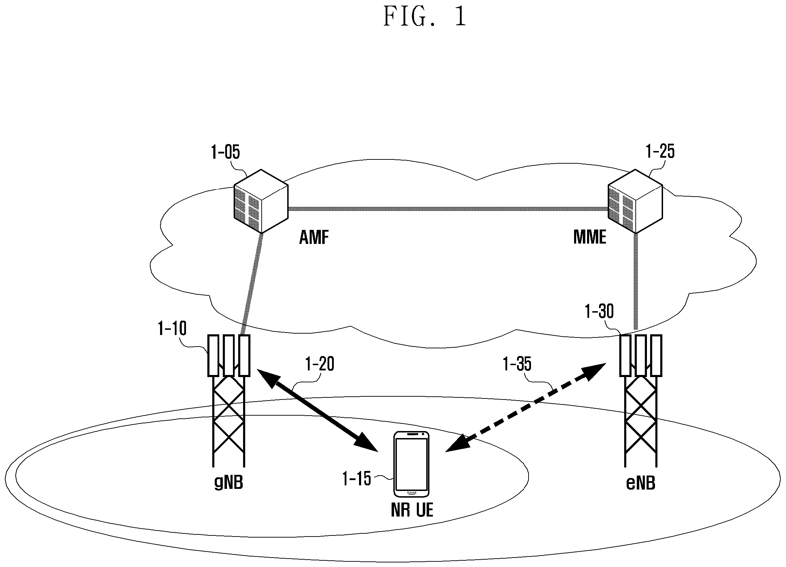

FIG. 1 is a diagram illustrating the architecture of a next-generation mobile communication system according to an embodiment of the disclosure.

With reference to FIG. 1, as shown in the drawing, the radio access network of a next-generation mobile communication system (new radio, NR) is composed of a new radio node B (hereinafter, gNB) 1-10 and an AMF (new radio core network) 1-05. A new radio user equipment (hereinafter, NR UE or terminal) 1-15 connects to an external network through the gNB 1-10 and the AMF 1-05.

In FIG. 1, the gNB 1-10 corresponds to an evolved node B (eNB) of the existing LTE system. The gNB 1-10 may be connected to the NR UE 1-15 through a radio channel, and it can provide a more superior service than that of the existing node B (1-20). As all user traffic is serviced through shared channels in the next-generation mobile communication system, there is a need for an entity that performs scheduling by collecting status information, such as buffer states, available transmission power states, and channel states of UEs, and the gNB 1-10 takes charge of this. In a typical situation, one gNB controls a plurality of cells. To implement ultra-high-speed data transmission compared with current LTE, a bandwidth beyond the existing maximum bandwidth may be utilized, and a beamforming technology may be additionally combined with orthogonal frequency division multiplexing (OFDM) serving as a radio access technology. Further, an adaptive modulation and coding (AMC) scheme determining a modulation scheme and channel coding rate to match the channel state of the UE is applied. The AMF 1-05 may perform functions such as mobility support, bearer configuration, and QoS (quality of service) configuration. The AMF 1-05 is an entity taking charge of not only mobility management but also various control functions for the UE, and is connected to a plurality of base stations. In addition, the next-generation mobile communication system may interwork with the existing LTE system, and the AMF 1-05 is connected to the MME 1-25 through a network interface. The MME 1-25 is connected to an eNB 1-30 being a legacy base station. The UE supporting LTE-NR dual connectivity may transmit and receive data while maintaining connections to both the gNB 1-10 and the eNB 1-30 (1-35).

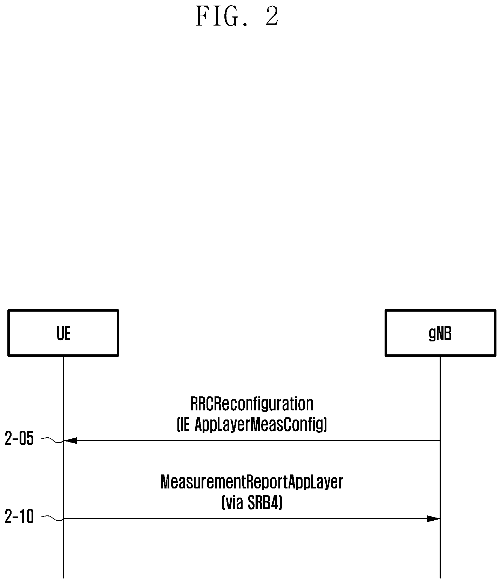

FIG. 2 is a diagram of QoE (quality of experience) measurement operation according to an embodiment of the disclosure.

QoE measurement and reporting operation means reporting a specific result measured at the application layer of the UE to the network (gNB) according to the network settings. The application layer refers to a layer that provides specific services such as a streaming service, MTSI (multimedia telephony service for IMS) service, and VR service. In addition, it will be expanded to AR/MR services and MBS (multicast/broadcast service) services.

QoE measurement and reporting operation may be driven at the time in case that the application layer of the network (gNB) provides the UE with configuration information for the operation. At this time, the base station transmits to the UE a specific RRC message including one RRC container in which the configuration information provided from the application layer of the network is stored (2-05). The specific RRC message may be a RRCReconfiguration message. The RRC container may be included in a specific IE, AppLayerMeasConfig, of the RRCReconfiguration message. The ASN.1 of the AppLayerMeasConfig IE is shown in Table 1 below.

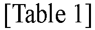

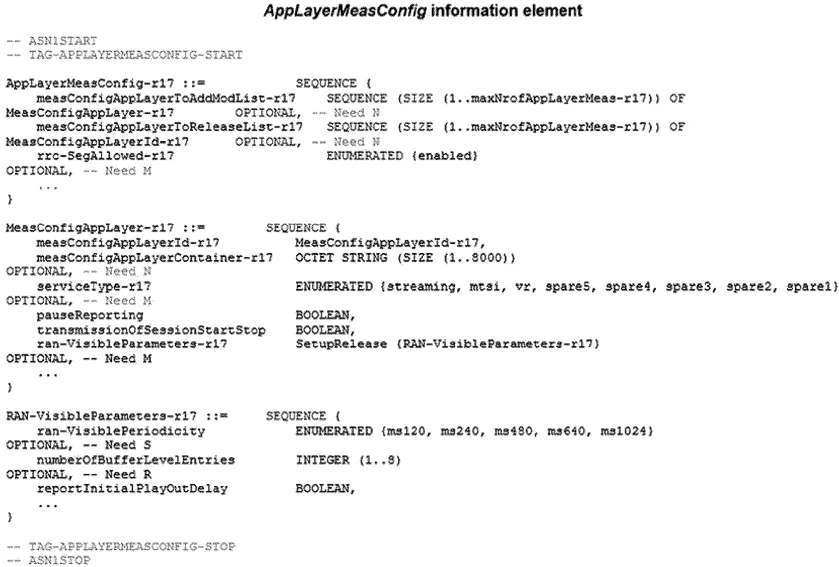

maxNrofAppLayerMeas is information indicating the maximum number of QoE configuration information sets (MeasConfigAppLayer IEs). Up to 16 (maxNrofAppLayerMeas = 16) QoE configuration information sets (MeasConfigAppLayer IEs) may be provided through AppLayerMeasConfig set by the base station. Each configuration information (MeasConfigAppLayer) is identified by an ID indicated by the measConfigAppLayerId field and corresponds to one application service indicated by the service Type field. The configuration information provided by the application layer of the network is stored in the measConfigAppLayerContainer field.

The configuration information (measConfigAppLayerContainer) is delivered to the application layer of the UE, and the application layer of the UE collects specific measurement results according to the above configuration information (measConfigAppLayerContainer). The collected results are stored in one RRC container and delivered to the application layer of the network (gNB) through a given RRC message MeasurementReportAppLayer (2-10). The MeasurementReportAppLayer message is provided via an SRB. The SRB may be SRB4 (signaling radio bearer 4). The ASN.1 of the MeasurementReportAppLayer message is shown in Table 2 below.

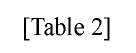

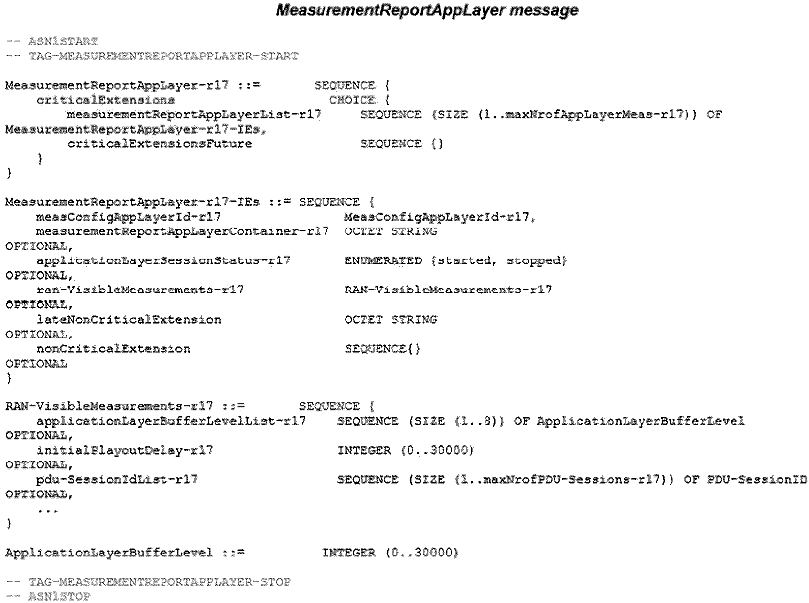

The above RRC message may include a measConfigAppLayerId field and multiple measurementReportAppLayerContainer fields separated by the measConfigAppLayerId field. QoE measurement results may be stored in the measurementReportAppLayerContainer fields. This RRC message may be transmitted from the UE to the base station.

In the Rel-17 NR system, the above QoE measurement and reporting operation is possible only in the connected mode. However, since the Rel-18 NR system will consider MBS services that can be served in all RRC states for the QoE measurement and reporting operation, QoE measurement and logging operation will also be performed in the RRC_IDLE and RRC INACTIVE states of the UE.

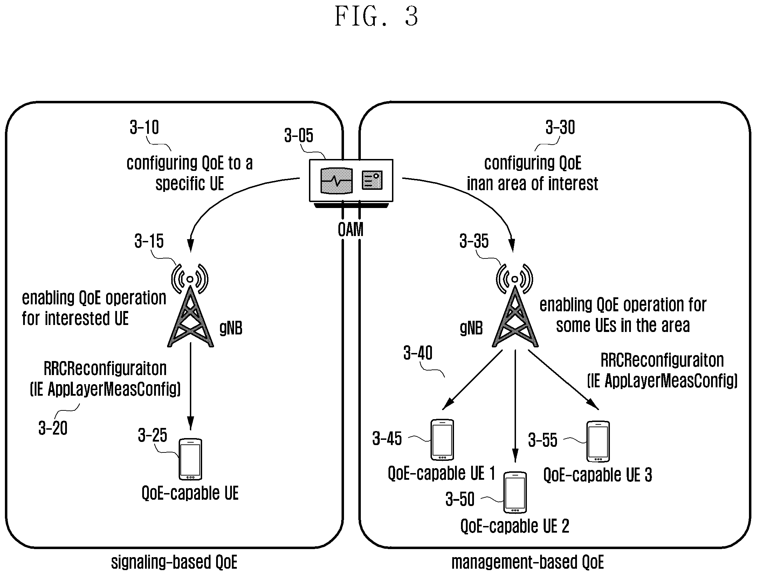

FIG. 3 is a diagram for explaining signaling-based QoE and management-based QoE according to an embodiment of the disclosure.

QoE is divided into signaling-based QoE and management-based QoE. There are signaling-based QoE where the OAM requests QoE operation to a specific UE, and management-based QoE in which the OAM requests QoE operation to specific UE(s) belonging to a specified area.

In signaling-based QoE, the OAM 3-05 designates a specific UE 3-25 to perform QoE operation and transmits related QoE configuration information to the base station 3-15 (3-10). The base station 3-15 includes the configuration information provided by the OAM in an RRCReconfiguration message and transmits it to the UE 3-25 (3-20).

In management-based QoE, the OAM 3-05 designates an area of interest where QoE results are required, and transmits related QoE configuration information to the base station 3-35 (3-30). The base station 3-35 selects specific UEs 3-45, 3-50 and 3-55 among the UEs supporting QoE in the interested area, and transmits an RRCReconfiguration message including the configuration information provided by the OAM to the selected UEs 3-45, 3-50 and 3-55 (3-40).

Signaling-based QoE is performed only in a designated UE and should not be invalidated (stopped or restricted) by management-based QoE. For example, a maximum of 16 QoE configuration sets may be configured in a single UE. If the QoE configurations exceed this number, an existing QoE configuration and related stored information may need to be deleted. At this time, the configuration information and measurement results for existing signaling-based QoE should not be deleted.

The UE(s) having received the above QoE configuration information do not recognize whether the QoE set for them is signaling-based or management-based. That is, the current QoE configuration information does not contain any information that can indicate whether it is signaling-based or management-based. However, since QoE operation in the Rel-17 NR system is performed only in the RRC_CONNECTED state of the UE, it is possible for the network to control the signaling-based QoE so that it is not stopped.

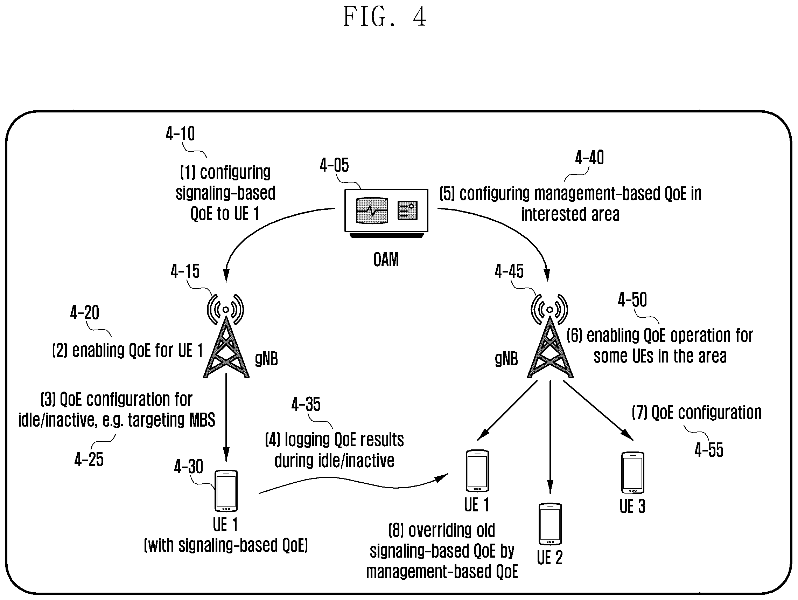

FIG. 4 is a diagram for explaining a problem in which signaling-based QoE is invalidated according to an embodiment of the disclosure.

MBS services that may be received in all RRC states can also be considered for QoE measurement. Hence, even in the RRC_IDLE or RRC_INACTIVE state, the UE may perform QoE measurement and storing operation. At this time, for the UE having transitioned to the RRC_CONNECTED state, it is difficult for the base station to determine whether signaling-based QoE has been previously configured in the UE. So, the base station may configure new QoE to the UE, and the UE may have to invalidate the previously configured signaling-based QoE to apply the new QoE configuration.

The OAM 4-05 transmits signaling-based QoE configuration information for a first UE 4-30 to the first base station 4-15 (4-10). This QoE configuration information is for the MBS service, which instructs the first UE 4-30 to perform QoE operation even in the RRC_IDLE or RRC_INACTIVE state. The first base station 4-15 triggers QoE for the first UE 4-30 in the RRC_CONNECTED state (4-20), and transmits configuration information on a QoE operation to be performed in the RRC_IDLE or RRC_INACTIVE state to the first UE 4-30 by using a specific RRC message (4-25). After transitioning to the RRC_IDLE or RRC_INACTIVE state, the first UE 4-30 collects and stores QoE measurement results according to the QoE configuration information (4-35). Thereafter, the first UE 4-30 is connected to the second base station 4-45. This first UE 4-30 maintains the configuration information for the signaling-based QoE operation that has not yet been terminated or unreported signaling-based QoE measurement results. The OAM 4-05 may request the second base station 4-45 to collect QoE measurement results in a specific area (4-40). The second base station 4-45 selects specific UE(s) among the UEs supporting QoE operation in the above area and configures QoE operation (4-55). At this time, if the first UE 4-30 is a selected UE and the first UE 4-30 cannot apply the new QoE operation without deleting the previously configured QoE configuration, the first UE 4-30 may have to delete the configuration information on the previously configured signaling-based QoE and related collected information. This means that the signaling-based QoE having been triggered by the OAM 4-05 is invalidated.

To prevent invalidation of signaling-based QoE as described above, the second base station 4-45 should be aware that the first UE 4-30 has configuration information for a signaling-based QoE operation that has not yet been terminated or unreported signaling-based QoE measurement results. Therefore, various embodiments of the disclosure propose a method by which the base station may determine whether a UE has configuration information for a signaling-based QoE operation that has not yet been terminated or unreported signaling-based QoE measurement results.

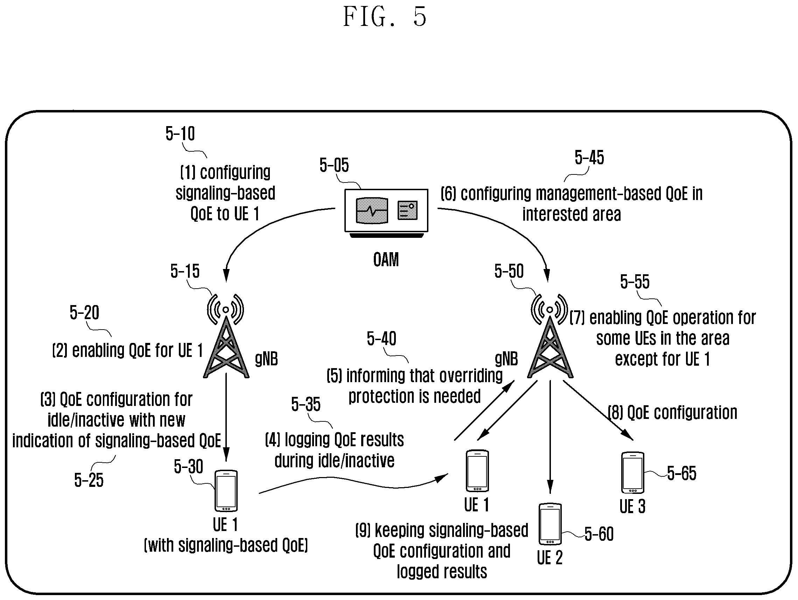

FIG. 5 is a diagram for explaining a method for protecting signaling-based QoE according to an embodiment of the disclosure.

In the disclosure, even in QoE performed in the RRC_IDLE or RRC_INACTIVE state, one or multiple QoE configuration information sets may be provided to one UE through a specific RRC message. Each QoE configuration information set corresponds to one service. Individual QoE configuration information sets may be identified by the measConfigAppLayerId field as in Rel-17 QoE, or by a trace reference. The trace reference information is composed of a PLMN ID (plmn-Identity field) and a trace ID (traceId field).

To configure the first UE 5-30 with signaling-based QoE to be performed in the RRC_IDLE or RRC_INACTIVE state, the OAM 5-05 transmits related configuration information to the first base station 5-15 (5-10). At this time, there may be one or multiple application services, and separate QoE configuration information sets may be provided in correspondence to each application service. The first base station 5-15 triggers QoE to the first UE 5-30 (5-20), and configures QoE to the first UE 5-30 in the RRC_CONNECTED state by using a specific RRC message (5-25). The above RRC message may be an existing LoggedMeasurementConfiguration message or RRCReconfiguration message, or a new RRC message.

Each QoE configuration information corresponding to one service provided by the first base station 5-15 includes an indication indicating whether the configured QoE is signaling-based or management-based. Through this indication, the first UE 5-30 may determine whether the QoE operation corresponding to each service is signaling-based or management-based. For example, one indication is set per measConfigAppLayerId or trace reference. If all the QoE configuration information sets to be configured are signaling-based QoE, a single indication indicating this may be set. To receive and recognize the above indication, a corresponding UE capability may be required, and for this purpose, the first UE 5-30 may report its capability information in advance to the first base station 5-15.

The first UE 5-30 transitions from the RRC_CONNECTED state to the RRC_IDLE or RRC_INACTIVE state, and performs QoE operation according to the QoE configuration in the above RRC state (5-35). When connected to the second base station 5-50, the above first UE 5-30 may report to the second base station that it has signaling-based QoE configuration information that needs to be protected or QoE measurement results that have been collected but not reported according to the signaling-based QoE configuration by using a specific RRC message (5-40). The specific RRC message may be an existing RRCSetupComplete, RRCResumeComplete, RRCReconfigurationComplete, RRCReestablishmentComplete or UEAssistanceInformation message, or a new RRC message. The first UE 5-30 may include one indication for each QoE configuration information set. For example, this indication may be included if one of the following conditions is satisfied.
1) Signaling-based QoE is configured, and results are available,
2) Signaling-based QoE is configured, but no results are available e.g. so far nothing stored, or all previously stored results retrieved, or
3) Signaling-based QoE configuration

As another method, for each QoE configuration information set, a Boolean format indication may be used to indicate whether the first UE 5-30 has valid signaling-based QoE configuration information or there are QoE measurement results collected but unreported according to the signaling-based QoE configuration. For example, if the Boolean format indication is set to 'true', this means that the first UE 5-30 has valid signaling-based QoE configuration information; if it set to 'false', this means that there are QoE measurement results that have been collected but not reported according to the signaling-based QoE configuration.

In addition to the above indication method, the UE may report, to the base station, information on a list of measConfigAppLayerId's or trace references corresponding to the previously configured signaling-based or management-based QoE, information on a list of measConfigAppLayerId's or trace references for which RAN visible QoE measurement is configured, or the like.

If a UE can handle multiple QoE operations simultaneously, the UE may have room to additionally configure a new QoE operation in addition to the previously configured (signaling-based) QoE operation. Hence, if the UE reports the number of currently configured signaling-based QoE configuration information sets to the base station, and the base station is aware of the maximum number of QoE operations that the UE can perform simultaneously, the base station can determine whether it can configure an additional QoE operation to the UE. Accordingly, the UE may report at least one of the following information to the base station.
- The number of signaling-based QoE configuration information sets currently configured in the UE
- The number of additionally configurable QoE operations in consideration of the existing (signaling-based) QoE
   (In addition, the UE may report other useful information to the base station.)
- An indication indicating that the QoE configuration has been released but there are QoE measurement results that have not yet been reported, or information on a list of measConfigAppLayerId's or trace references corresponding thereto
- An indication indicating that RAN visible QoE configuration information is configured or that there are RAN visible QoE measurement results, or information on a list of measConfigAppLayerId's or trace references corresponding thereto
- Service type information of previously configured QoE. It may be indicated per measConfigAppLayerId or trace reference

The UE may also transmit QoE configuration information (or, portion thereof) configured by the old base station to the newly connected serving base station by using a specific RRC message.

The OAM 5-05 configures management-based QoE for a specific area to the second base station 5-50 (5-45). The second base station 5-50 may configure QoE to specific UEs 5-60 and 5-65 except for the first terminal 5-30 (5-55). If the first UE 5-30 possesses previously configured signaling-based QoE but can additionally perform QoE operation, the second base station 5-50 may additionally configure QoE to the first UE 5-30 as far as allowed.

If the first UE 5-30 possesses previously configured management-based QoE, it may be overridden by the QoE configured by the second base station 5-50. At this time, the second base station 5-50 may assign the same ID as measConfigAppLayerId or trace reference corresponding to the previously configured management-based QoE to the new QoE configuration information and configure it to the first UE 5-30. Upon receiving this, the first UE 5-30 considers that the previously configured management-based QoE is overridden with the new QoE configuration information, deletes the previously configured QoE configuration information, and applies the new QoE configuration information instead. If intending to release the previously configured management-based QoE, the second base station 5-50 may instruct, along with corresponding measConfigAppLayerId or trace reference information, the first UE 5-30 to release it.

If all QoE configuration information sets of the first UE 5-30 are management-based QoE and the second base station 5-50 intends to release them all, the second base station 5-50 may transmit an indication indicating this to the first UE 5-30.

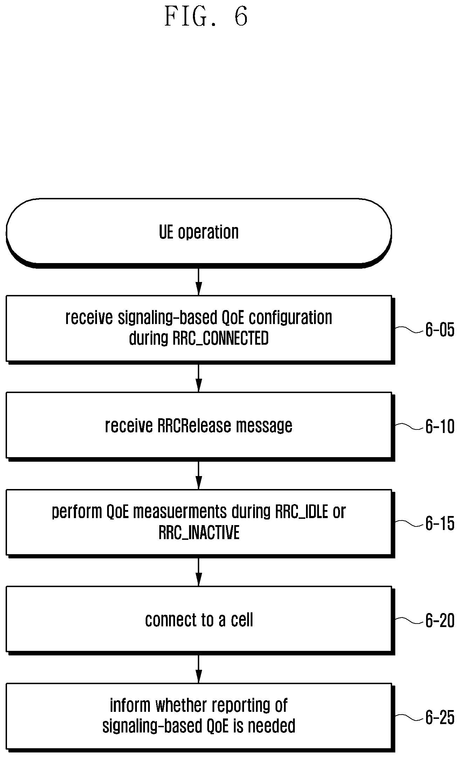

FIG. 6 is a diagram describing UE operations for protecting signaling-based QoE according to an embodiment of the disclosure.

The operation of the UE in FIG. 6 may correspond to the operation of the first UE in FIG. 5, and FIG. 5 may be referenced for detailed operations.

At step 6-05, the UE in the RRC_CONNECTED state receives QoE configuration information to be applied in the RRC_IDLE or RRC_INACTIVE state from the base station. This configuration information is composed of QoE configuration information sets corresponding respectively to multiple services. Each QoE configuration information set includes an indication indicating whether the corresponding QoE operation is signaling-based QoE or management-based QoE.

At step 6-10, the UE receives an RRCRelease message from the base station. This message includes configuration information indicating switching to the RRC_IDLE or RRC INACTIVE state.

At step 6-15, the UE performs QoE operation in the RRC_IDLE or RRC_INACTIVE state according to the received QoE configuration information.

At step 6-20, the UE switches to the RRC_CONNECTED state with respect to the base station. This base station may be the base station that has transmitted the RRCRelease message or a different base station.

At step 6-25, the UE transmits an indication to the base station indicating that the UE possesses previously configured signaling-based QoE. For example, the UE may report at least one of the following information.
- For each QoE configuration information set, an indication indicating whether one of the following conditions is satisfied
   1) Signaling-based QoE is configured, and results are usable
   2) Signaling-based QoE is configured, but no results are available e.g. so far nothing stored, or all previously stored results retrieved or
   3) Signaling-based QoE configuration
- For each QoE configuration information set, a Boolean format indication indicating whether the UE possesses valid signaling-based QoE configuration information or whether there are QoE measurement results collected but unreported according to a signaling-based QoE configuration
- Information on a list of measConfigAppLayerId's or trace references corresponding to previously configured signaling-based or management-based QoE
- Information on a list of measConfigAppLayerId's or trace references for which RAN visible QoE measurement is configured
- The number of signaling-based QoE configuration information sets currently configured in the UE
- The maximum number of additionally configurable QoE in consideration of existing (signaling-based) QoE
- An indication indicating that the QoE configuration has been released but there are QoE measurement results that have not yet been reported, or information on a list of measConfigAppLayerId's or trace references corresponding thereto
- An indication indicating that RAN visible QoE configuration information is configured or that there are RAN visible QoE measurement results, or information on a list of measConfigAppLayerId's or trace references corresponding thereto
- Service type information of previously configured QoE. It may be indicated per measConfigAppLayerId or trace reference

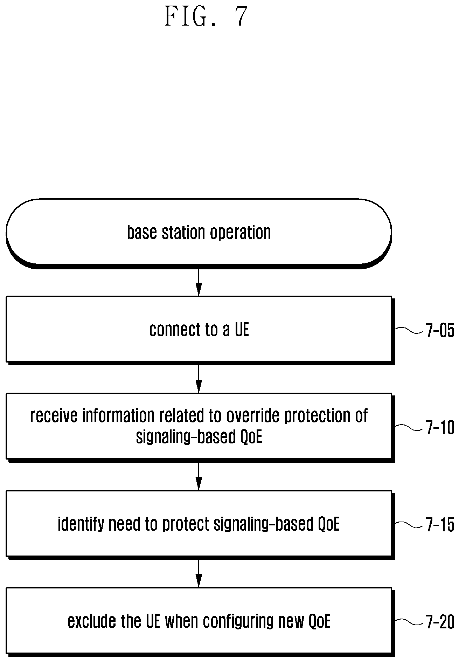

The base station having received at least one piece of information from the UE may perform operations to protect signaling-based QoE. For detailed operations, refer to the operations in FIG. 5 and FIG. 7 below.

FIG. 7 is a diagram describing base station operations for protecting signaling-based QoE according to an embodiment of the disclosure.

The operation of the base station in FIG. 7 may correspond to the operation of the second base station in FIG. 5, and FIG. 5 may be referenced for detailed operations.

At step 7-05, the base station connects to the UE.

At step 7-10, the base station receives at least one piece of the above information from the UE. For the at least one piece of information, refer to at least one piece of information described at step 6-25 of FIG. 6.

At step 7-15, the base station recognizes that the UE has measurement results according to signaling-based QoE or the above QoE configuration. For example, based on the information received at step 7-10, the base station may identify that the UE has measurement results according to signaling-based QoE or the above QoE configuration.

At step 7-20, when configuring management-based QoE, the base station may exclude the UE or configure new QoE as far as the UE allows.

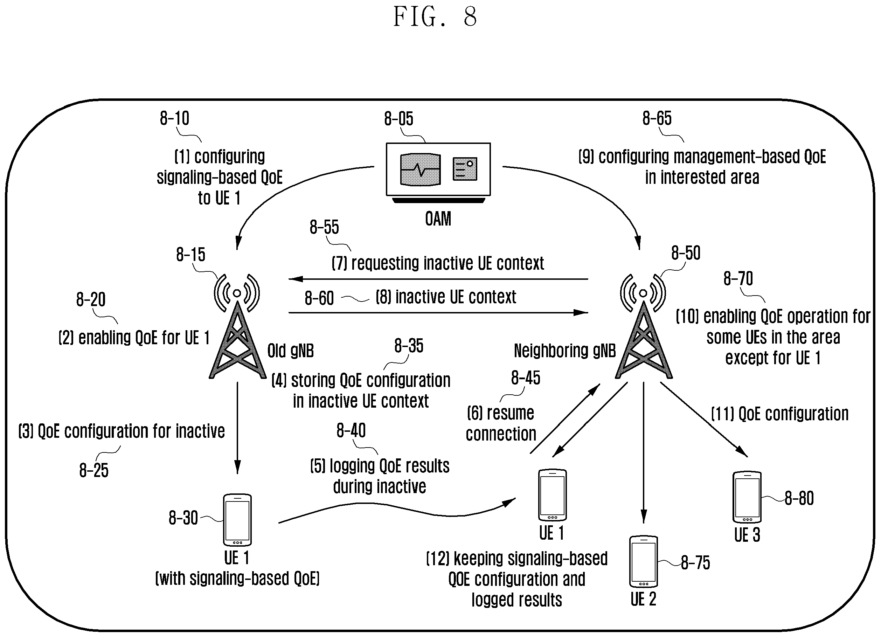

FIG. 8 is a diagram for describing a method for protecting signaling-based QoE in RRC_INACTIVE mode according to an embodiment of the disclosure.

In case that the UE transitions from the RRC_INACTIVE state to the RRC_CONNECTED state, the serving base station may retrieve various configuration information on the UE from the old base station. This configuration information is called "inactive UE context". Embodiments of the disclosure propose a method of additionally including QoE configuration information provided to the UE in the inactive UE context and allowing the serving cell to utilize the same to prevent signaling-based QoE from being overridden.

The OAM 8-05 transmits signaling-based QoE configuration information for the first UE 8-30 to the first base station 8-15 (8-10). This QoE configuration information is for the MBS service, which instructs the first UE 8-30 to perform QoE operation even in the RRC_IDLE or RRC_INACTIVE state. The first base station 8-15 triggers QoE for the first UE 8-30 in the RRC_CONNECTED state (8-20) and transmits, to the first UE, configuration information for the QoE operation to be performed in the RRC_IDLE or RRC_INACTIVE state by using a specific RRC message (8-25).

The first base station 8-15 transmits an RRCRelease message including a suspendConfig IE to the first UE 8-30 and stores the inactive UE context of the first UE 8-30. The inactive UE context may include QoE configuration information set for the first UE 8-30 (8-35). After the first UE 8-30 transitions to the RRC_IDLE or RRC_INACTIVE state, it collects and stores QoE measurement results according to the QoE configuration information (8-40).

Thereafter, the first UE 8-30 is connected to the second base station 8-50 through a resume process (8-45). The second base station 8-50 makes a request for the inactive UE context of the first UE 8-30 to the first base station 8-15 (8-55). Upon receiving the above request, the first base station 8-15 transmits the inactive UE context to the second base station 8-50 (8-60). Based on the inactive UE context, the second base station 8-50 recognizes that the first UE 8-30 has configuration information for a signaling-based QoE operation that has not yet been terminated, or unreported signaling-based QoE measurement results. The second base station 8-50 may control the QoE operation of the first UE 8-30 based on the information obtained from the inactive UE context.

The OAM 8-05 may request the second base station 8-50 to collect QoE measurement results in a specific area (8-65). The second base station 8-50 selects specific UE(s) among the UEs supporting QoE operation in the area and configures QoE operation to the selected UEs (8-70). At this time, the second base station 8-50 may configure QoE to specific UEs 8-75 and 8-80 except for the first UE 8-30. The second base station 8-50 may configure QoE to the first UE 8-30 based on the information obtained from the inactive UE context. If the first UE 8-30 possesses previously configured signaling-based QoE but can additionally perform a QoE operation, the second base station 8-50 may additionally configure QoE to the first UE 8-30 as far as allowed.

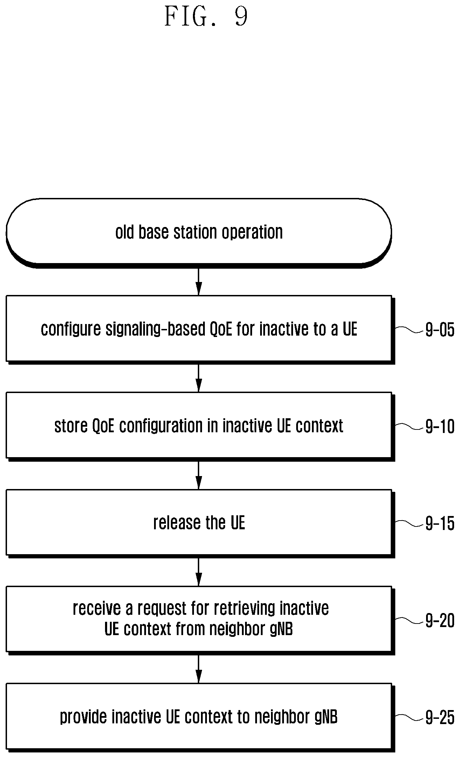

FIG. 9 is a diagram describing operations of the old base station (old gNB) for protecting signaling-based QoE in RRC_INACTIVE mode according to an embodiment of the disclosure.

The operation of the old base station in FIG. 9 may correspond to the operation of the first base station in FIG. 8, and FIG. 8 may be referenced for the detailed operation.

At step 9-05, the base station configures the UE with signaling-based QoE to be applied in RRC INACTIVE.

At step 9-10, the base station stores the QoE configuration information in the inactive UE context of the UE.

At step 9-15, the base station causes the UE to transition to the RRC_INACTIVE state through an RRCRelease message.

At step 9-20, the base station receives a request for the inactive UE context of the UE from a neighbor base station. The base station may check whether the inactive UE context for the UE requested from the neighbor base station is stored.

At step 9-25, the base station transmits the requested inactive UE context to the neighbor base station.

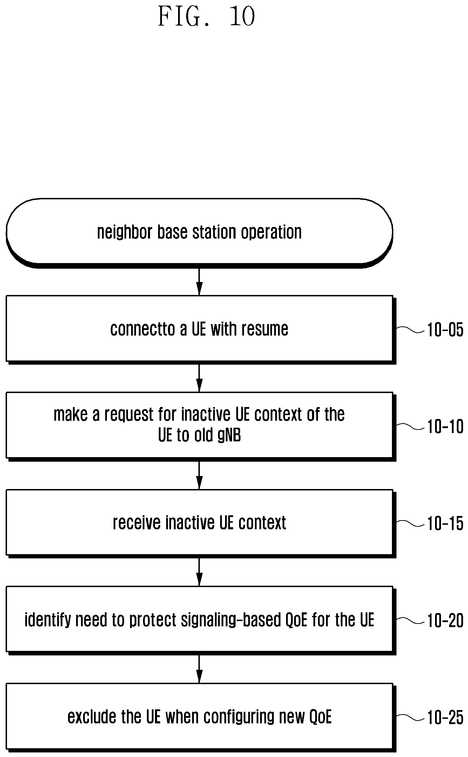

FIG. 10 is a diagram describing operations of the neighbor base station for protecting signaling-based QoE in RRC_INACTIVE mode according to an embodiment of the disclosure.

The operation of the neighbor base station in FIG. 10 may correspond to the operation of the second base station in FIG. 8, and FIG. 8 may be referenced for the detailed operation.

At step 10-05, the base station is connected to the UE through a resume process.

At step 10-10, the base station makes a request for the inactive UE context of the UE to the old serving base station of the UE.

At step 10-15, the base station receives the inactive UE context from the old serving base station.

At step 10-20, based on the inactive UE context, the base station is aware that the UE has configuration information for signaling-based QoE operation that has not yet been terminated, or unreported signaling-based QoE measurement results.

At step 10-25, the base station configures QoE to selected UEs except for the UE. If the UE possesses previously configured signaling-based QoE but can additionally perform QoE operation, the base station may additionally configure QoE to the UE as far as allowed.

In another way, if the UE can no longer apply a new QoE configuration due to the previously configured signaling-based QoE operation, the UE may ignore the new QoE configuration set by the network and continue the previously configured signaling-based QoE operation. At this time, the UE may report, using a specific indication, that it cannot apply the new QoE operation set by the network due to previously configured signaling-based QoE set by the network.

Meanwhile, the method for providing information indicating that a UE has signaling-based QoE is described with reference to FIGS. 5, 6 and 7, and the method for an old gNB to provide an inactive UE context is described with reference to FIGS. 8, 9 and 10, but it may be possible to carry out them in combination. For example, if the UE cannot provide information indicating that the UE has signaling-based QoE after transitioning to the connected state, the old serving base station may provide the inactive UE context to the current serving base station. Conversely, if the current serving base station makes a request for the inactive UE context to the old serving base station, but the corresponding information is not stored in the old serving base station, it may request the UE to report information indicating that there is signaling-based QoE.

In addition, in case that the UE having transitioned from the RRC IDLE or INACTIVE state to the RRC connected state provides information on signaling-based QoE, the current serving base station may selectively request the inactive UE context from the old serving base station or request the terminal to report information indicating that there is signaling-based QoE.

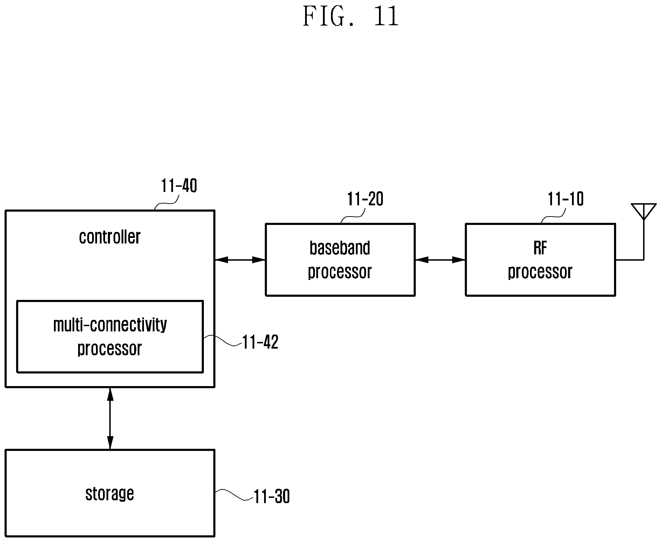

FIG. 11 is a diagram showing the structure of a UE according to an embodiment of the disclosure.

With reference to FIG. 11, the UE may include a radio frequency (RF) processor 11-10, a baseband processor 11-20, a storage 11-30, and a controller 11-40. Additionally, the controller 11-40 may include a multi-connectivity processor 11-42.

The RF processor 11-10 performs a function for transmitting and receiving a signal through a radio channel, such as signal band conversion and amplification. That is, the RF processor 11-10 performs up-conversion of a baseband signal provided from the baseband processor 11-20 into an RF-band signal and transmit it through an antenna, and performs down-conversion of an RF-band signal received through an antenna into a baseband signal. For example, the RF processor 11-10 may include a transmission filter, a reception filter, an amplifier, a mixer, an oscillator, a digital-to-analog converter (DAC), and an analog-to-digital converter (ADC). Although only one antenna is illustrated in the drawing, the UE may be provided with a plurality of antennas. Also, the RF processor 11-10 may include a plurality of RF chains. Further, the RF processor 11-10 may perform beamforming. For beamforming, the RF processor 11-10 may adjust phases and magnitudes of individual signals transmitted and received through the plural antennas or antenna elements. Further, the RF processor may perform MIMO (multi input multi output), and may receive several layers during an MIMO operation.

The baseband processor 11-20 performs conversion between a baseband signal and a bit stream in accordance with the physical layer specification of the system. For example, during data transmission, the baseband processor 11-20 generates complex symbols by encoding and modulating a transmission bit stream. Further, during data reception, the baseband processor 11-20 restores a reception bit stream by demodulating and decoding a baseband signal provided from the RF processor 11-10. For example, in the case of utilizing orthogonal frequency division multiplexing (OFDM), for data transmission, the baseband processor 11-20 generates complex symbols by encoding and modulating a transmission bit stream, maps the complex symbols to subcarriers, and composes OFDM symbols through inverse fast Fourier transform (IFFT) operation and cyclic prefix (CP) insertion. Further, for data reception, the baseband processor 11-20 divides a baseband signal provided from the RF processor 11-10 in units of OFDM symbols, restores the signals mapped to subcarriers through fast Fourier transform (FFT) operation, and restores the reception bit stream through demodulation and decoding.

The baseband processor 11-20 and the RF processor 11-10 transmit and receive signals as described above. The baseband processor 11-20 and the RF processor 11-10 may be called a transmitter, a receiver, a transceiver, or a communication unit. Further, to support different radio access technologies, at least one of the baseband processor 11-20 or the RF processor 11-10 may include a plurality of communication modules. In addition, to process signals of different frequency bands, at least one of the baseband processor 11-20 or the RF processor 11-10 may include different communication modules. For example, the different radio access technologies may include a wireless LAN (e.g., IEEE 802.11), a cellular network (e.g., LTE), and the like. In addition, the different frequency bands may include a super high frequency (SHF) band (e.g., 2.NRHz, NRhz) and a millimeter wave (mmWave) band (e.g., 60 GHz).

The storage 11-30 stores data such as basic programs, application programs, and configuration information for the operation of the UE. In particular, the storage 11-30 may store information on a second access node that performs wireless communication using a second radio access technology. The storage 11-30 provides stored data in response to a request from the controller 11-40.

The controller 11-40 controls the overall operation of the UE. For example, the controller 11-40 transmits and receives signals through the baseband processor 11-20 and the RF processor 11-10. Further, the controller 11-40 writes or reads data to or from the storage 11-30. To this end, the controller 11-40 may include at least one processor. For example, the controller 11-40 may include a communication processor (CP) for controlling communication and an application processor (AP) for controlling higher layers such as application programs.

In addition, the controller 11-40 may control the operation of the UE according to various embodiments of the disclosure.

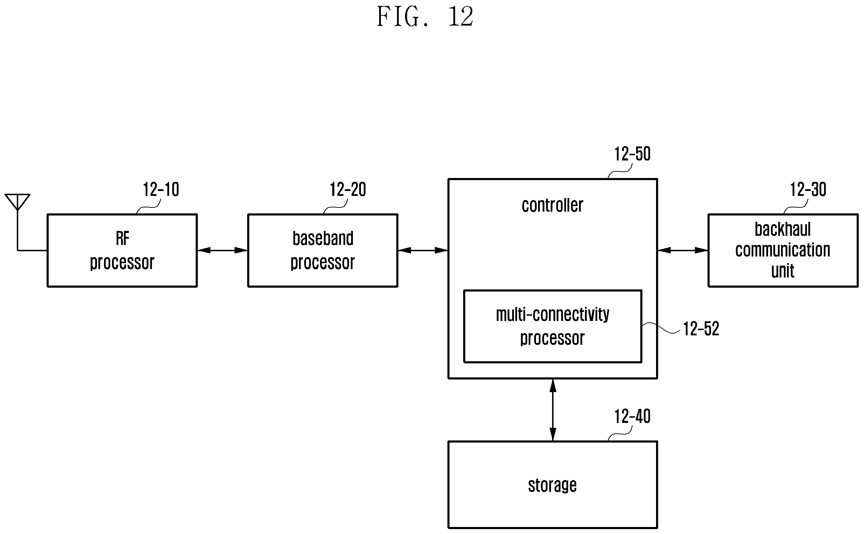

FIG. 12 is a diagram showing the structure of a base station in a wireless communication system according to an embodiment of the disclosure.

As shown in the drawing, the base station includes an RF processor 12-10, a baseband processor 12-20, a backhaul communication unit 12-30, a storage 12-40, and a controller 12-50. Additionally, the controller 12-50 may include a multi-connectivity processor 12-52.

The RF processor 12-10 performs a function for transmitting and receiving a signal through a radio channel, such as signal band conversion and amplification. That is, the RF processor 12-10 performs up-conversion of a baseband signal provided from the baseband processor 12-20 into an RF-band signal and transmits the converted signal through an antenna, and performs down-conversion of an RF-band signal received through an antenna into a baseband signal. For example, the RF processor 12-10 may include a transmission filter, a reception filter, an amplifier, a mixer, an oscillator, a DAC, and an ADC. Although only one antenna is illustrated in the drawing, the first access node may be provided with a plurality of antennas. Additionally, the RF processor 12-10 may include a plurality of RF chains. Further, the RF processor 12-10 may perform beamforming. For beamforming, the RF processor 12-10 may adjust phases and amplitudes of individual signals transmitted and received through plural antennas or antenna elements. The RF processor may perform downlink MIMO operation by transmitting one or more layers.

The baseband processor 12-20 performs conversion between a baseband signal and a bit stream in accordance with the physical layer specification of a first radio access technology. For example, for data transmission, the baseband processor 12-20 generates complex symbols by encoding and modulating a transmission bit stream. Further, for data reception, the baseband processor 12-20 restores a reception bit stream by demodulating and decoding a baseband signal provided from the RF processor 12-10. For example, in the case of utilizing OFDM, for data transmission, the baseband processor 12-20 generates complex symbols by encoding and modulating a transmission bit stream, maps the complex symbols to subcarriers, and composes OFDM symbols through IFFT operation and CP insertion. Further, for data reception, the baseband processor 12-20 divides a baseband signal provided from the RF processor 12-10 in units of OFDM symbols, restores the signals mapped to subcarriers through FFT operation, and restores the reception bit stream through demodulation and decoding. The baseband processor 12-20 and the RF processor 12-10 transmits and receives signals as described above. Hence, the baseband processor 12-20 and the RF processor 12-10 may be called a transmitter, a receiver, a transceiver, a communication unit, or a wireless communication unit.

The backhaul communication unit 12-30 provides an interface for communication with other nodes in the network. That is, the backhaul communication unit 12-30 converts a bit stream, which is to be transmitted from the base station to another node, for example, a secondary base station or the core network, into a physical signal, and converts a physical signal received from another node into a bit stream.

The storage 12-40 stores data such as basic programs, application programs, and configuration information for the operation of the base station. In particular, the storage 12-40 may store information on a bearer allocated to a connected UE and measurement results reported from the connected UE. Further, the storage 12-40 may store information used as a criterion for determining whether to provide or suspend multi-connectivity to the UE. In addition, the storage 12-40 provides stored data in response to a request from the controller 12-50.

The controller 12-50 controls the overall operation of the base station. For example, the controller 12-50 transmits and receives signals through the baseband processor 12-20 and the RF processor 12-10 or through the backhaul communication unit 12-30. Further, the controller 12-50 writes or reads data to or from the storage 12-40. To this end, the controller 12-50 may include at least one processor.

In addition, the controller 12-50 may control the operation of the base station according to various embodiments of the disclosure.

The methods according to the embodiments described in the claims or specification of the disclosure may be implemented in the form of hardware, software, or a combination thereof.

When implemented in software, a computer-readable storage medium storing one or more programs (software modules) may be provided. The one or more programs stored in the computer-readable storage medium may be configured to be executable by one or more processors of an electronic device. The one or more programs may include instructions that cause the electronic device to execute the methods according to the embodiments described in the claims or specification of the disclosure.

Such a program (software module, software) may be stored in a random access memory, a nonvolatile memory such as a flash memory, a read only memory (ROM), an electrically erasable programmable read only memory (EEPROM), a magnetic disc storage device, a compact disc ROM (CD-ROM), a digital versatile disc (DVD), other types of optical storage devices, or a magnetic cassette. Or, such a program may be stored in a memory composed of a combination of some or all of them. In addition, a plurality of component memories may be included.

In addition, such a program may be stored in an attachable storage device that can be accessed through a communication network such as the Internet, an intranet, a local area network (LAN), a wide LAN (WLAN), or a storage area network (SAN), or through a communication network composed of a combination thereof. Such a storage device may access the equipment that carries out an embodiment of the disclosure through an external port. In addition, a separate storage device on a communication network may access the equipment that carries out an embodiment of the disclosure.

In the embodiments of the disclosure described above, the elements included in the disclosure are expressed in a singular or plural form according to the presented specific embodiment. However, the singular or plural expression is appropriately selected for ease of description according to the presented situation, and the disclosure is not limited by a single element or plural elements. Those elements described in a plural form may be configured as a single element, and those elements described in a singular form may be configured as plural elements.

Meanwhile, the embodiments of the disclosure disclosed in the present specification and drawings are only provided as specific examples to easily explain the technical details of the disclosure and to aid understanding of the disclosure, and are not intended to limit the scope of the disclosure. That is, it will be apparent to those of ordinary skill in the art that other modifications based on the technical idea of the disclosure can be carried out. In addition, some of the embodiments may be combined with each other if necessary for operation. For example, parts of one embodiment and another embodiment of the disclosure may be combined with each other to operate the base station and the UE. Further, the embodiments of the disclosure are applicable to other communication systems, and other modifications based on the technical ideas of the embodiments may also be carried out.

## Claims

1. A method of a terminal in a wireless communication system, the method comprising:
receiving a first radio resource control (RRC) message including **at least** quality-of-experience (QoE) configuration information and information indicating that the QoE configuration information is related to one piece of signaling-based QoE configuration information;
receiving a second RRC message for RRC connection release;
performing a QoE measurement operation based on at least one piece of QoE configuration information; and
transmitting, in case that the terminal in RRC idle state or RRC inactive state is connected to a base station, a third RRC message including signaling-based QoE related information to the base station.

2. The method of claim 1,
wherein the signaling-based QoE related information includes at least one of information indicating that the terminal has signaling-based QoE configuration information requiring protection, or information indicating that the terminal has QoE measurement results collected based on signaling-based QoE configuration information.

3. The method of claim 1,
wherein the signaling-based QoE related information is used to determine whether to configure management-based QoE to the terminal.

4. The method of claim 1,
wherein the third RRC message includes at least one of information on a number of QoE configuration information configured to the terminal, information on a number of QoE configuration information additionally configurable to the terminal, information indicating presence of unreported QoE measurement results, information indicating that radio access network (RAN) visible QoE configuration information has been configured, or information on a service type of previously configured QoE.

5. A method of a base station in a wireless communication system, the method comprising:
receiving, in case that connected to a terminal in radio resource control (RRC) idle state or RRC inactive state, an RRC message including signaling-based quality-of- experience (QoE) related information from the terminal;
receiving a request for configuring management-based QoE from a server; and
determining whether to configure management-based QoE to the terminal based on the signaling-based QoE related information.

6. The method of claim 5,
wherein the signaling-based QoE related information includes at least one of information indicating that the terminal has signaling-based QoE configuration information requiring protection, or information indicating that the terminal has QoE measurement results collected based on signaling-based QoE configuration information.

7. The method of claim 5,
wherein based on the signaling-based QoE related information, the management-based QoE configuration is applied to one or more terminals except for the above terminal.

8. The method of claim 5,
wherein the RRC message includes at least one of information on a number of QoE configuration information configured to the terminal, information on a number of QoE configuration information additionally configurable to the terminal, information indicating presence of unreported QoE measurement results, information indicating that radio access network (RAN) visible QoE configuration information has been configured, or information on a service type of previously configured QoE.

9. A terminal in a wireless communication system, comprising:
a transceiver; and
a controller,
wherein the controller is configured to control:
receiving a first radio resource control (RRC) message including at least quality-of-experience (QoE) configuration information and information indicating that the QoE configuration information is related to one piece of signaling-based QoE configuration information;
receiving a second RRC message for RRC connection release;
performing a QoE measurement operation based on at least one piece of QoE configuration information; and
transmitting, in case that the terminal in RRC idle state or RRC inactive state is connected to a base station, a third RRC message including signaling-based QoE related information to the base station.

10. The terminal of claim 9,
wherein the signaling-based QoE related information includes at least one of information indicating that the terminal has signaling-based QoE configuration information requiring protection, or information indicating that the terminal has QoE measurement results collected based on signaling-based QoE configuration information.

11. The terminal of claim 9,
wherein the signaling-based QoE related information is used to determine whether to configure management-based QoE to the terminal.

12. The terminal of claim 9,
wherein the third RRC message includes at least one of information on a number of QoE configuration information configured to the terminal, information on a number of QoE configuration information additionally configurable to the terminal, information indicating presence of unreported QoE measurement results, information indicating that radio access network (RAN) visible QoE configuration information has been configured, or information on a service type of previously configured QoE.

13. A base station in a wireless communication system, comprising:
a transceiver; and
a controller,
wherein the controller is configured to control:
receiving, in case that connected to a terminal in radio resource control (RRC) idle state or RRC inactive state, an RRC message including signaling-based quality-of- experience (QoE) related information from the terminal;
receiving a request for configuring management-based QoE from a server; and
determining whether to configure management-based QoE to the terminal based on the signaling-based QoE related information.

14. The base station of claim 13,
wherein the signaling-based QoE related information includes at least one of information indicating that the terminal has signaling-based QoE configuration information requiring protection, or information indicating that the terminal has QoE measurement results collected based on signaling-based QoE configuration information.

15. The base station of claim 13,
wherein based on the signaling-based QoE related information, the management-based QoE configuration is applied to one or more terminals except for the above terminal.
